# EUROPEAN PATENT APPLICATION

(11) **EP 4 755 936 A1**
(43) Date of publication of application: **10.06.2026**
(21) Application number: 24217567.7
(22) Date of filing: 04.12.2024
(51) Int. Cl.: C08G 18/10, C08G 18/70, C09J 175/04

(54) **A ONE-COMPONENT REACTIVE DISPERSION ADHESIVE**

(71) Applicant: Sika Technology AG, 6340 Baar (CH)
(72) Inventor: BRÜGGEMANN, Simon, 22525 Hamburg (DE); HANHÖRSTER, Thomas, 22525 Hamburg (DE)
(74) Representative: Sika Patent Attorneys

(57) **Abstract**

The invention relates to a one-component dispersion adhesive comprising:
a) At least one polyurethane polymer PU having isocyanate-reactive groups,
b) At least one polymer P obtained from polymerization of one or more types of olefinically unsaturated monomers, and
c) At least one surface deactivated oligomeric polyisocyanate PI.

## Description

### Technical field

The invention relates to dispersion adhesives, particularly one-component reactive dispersion adhesives, and to use of these as an assembly adhesive, particularly in automotive industry.

### Background of the invention

Waterborne dispersion adhesives and hot-melt adhesives are commonly used in the manufacture of automotive parts. These types of adhesives are used for bonding of a multitude of different types of materials including, for example, foils, foams, and fabrics to polar and non-polar substrates, such as metal or plastic, such as polyolefins, ABS, and polyvinylchloride.

In the automotive industry, waterborne dispersion adhesives and hot-melt adhesives are particularly frequently used in two-dimensional bonding processes, which are conducted by original equipment suppliers (OES) to provide bonded parts to original equipment manufacturers (OEM). Typical applications for such two-dimensional bonding processes include the production of dashboards, headliners, steering wheels, and door parts such as inserts and armrests.

Hot-melt adhesives are solvent free adhesives, which are solid at room temperature and which are applied to the substrate to be bonded in form of a melt. After cooling the adhesive solidifies and forms an adhesive bond with the substrate through physically occurring bonding. Conventional hot-melt adhesives are non-reactive adhesives, which soften again upon heating and are, therefore, not suitable to be used at elevated temperatures. Reactive hot-melt adhesives contain polymers with reactive groups that enable chemical curing of the adhesive, for example, by crosslinking of the polymer chains. Due to the chemically cured polymer matrix reactive hot-melt adhesives do not soften upon heating and these adhesives are, therefore, suitable for use also at elevated temperatures. The chemical curing of the polymers can be initiated, for example, by exposing the adhesive composition to water, such as atmospheric moisture. Moisture curing hot-melt adhesives typically contain polymers, for example, polyolefins or polyurethane polymers, which are functionalized with isocyanate or silane groups that enable crosslinking of the polymer chains upon contact with atmospheric moisture.

Dispersion adhesives are adhesives that are provided in form of dispersions or emulsions. Water based dispersion adhesives, also known as aqueous dispersion adhesives, contain water as the main continuous (carrier) phase and one or more different types of polymers in the dispersed (solid) phase. Dispersion adhesives can be provided as non-reactive or reactive compositions, wherein non-reactive adhesives contain no polymers that react chemically with each other or with other particles at normal room temperature or at an elevated temperature. Reactive adhesives can be provided either as one-component or two-component compositions, where a second reactive component is mixed with a first dispersion component prior to application of the adhesive.

Dispersion adhesives are applied to a substrate to form a wet adhesive film, which is then subjected to active or passive drying to remove at least a portion, typically most of the solvent material contained in the wet adhesive film. The dried adhesive layer is typically non-tacky and is typically reactivated/activated by heating before being contacted with a surface of another substate, especially if the pre-coated substrate is stored for more than couple of minutes before being contacted with the other substrate. Latent curing reactive dispersion adhesives have the inherent advantage that they can be provided as one-component storage stable compositions, which enables using a simplified application process not involving mixing of separate component at the time of use.

EP 0 467 168 A1 discloses a one-component reactive dispersion adhesive comprising one or more dispersed polymers with isocyanate-reactive groups and dispersed surface deactivated solid polyisocyanate particles and its use for bonding of woven and non-woven substrates. The disclosed adhesive composition is cured by heating the dried adhesive layer to an activation temperature, which results in initiation of the chemical curing reactions between the isocyanate groups of the polyisocyanate and the isocyanate-reactive groups of the polymers.

Waterborne adhesive used in the manufacture of automotive parts are subjected to various requirements, which should be fulfilled before the adhesive can be considered as suitable for use in a particular bonding application. Generally, the adhesives should, for example, have good application properties, especially in terms of viscosity, rheological properties, and storage stability, good bonding properties to various types of substrates, high initial adhesion, sufficient final strength and thermal stability of the adhesive bond, low emission of volatile and semi-volatile organic compounds (VOC, FOG) and harmful substances as well as low odor. Especially, a reactive dispersion adhesive for use in bonding of automotive interior parts should exhibit a low reactivation/activation temperature and high final adhesive bond strength as well as good heat resistance after curing.

Fulfilling all or at least majority of the above discussed requirements has turned out to be highly challenging. Particularly, it turned out that the reactive dispersion adhesives of prior art have some disadvantages that make them less suitable for use in bonding of automotive interior parts, especially bonding of plastic parts to automotive headliners.

There is thus a need for novel one-component reactive dispersion adhesive, which solves or at least mitigates the problems of prior art solutions as discussed above.

### Summary of the invention

The object of the present invention is to provide a one-component dispersion adhesive for use in bonding of automotive interior parts, such as in bonding of plastic parts to automotive headliners, which adhesive overcomes or at least mitigates the disadvantages of the prior art dispersion adhesives as discussed above.

Particularly, it is an object of the present invention to provide a reactive dispersion adhesive that exhibits a low activation temperature and high final adhesive bond strength as well as good heat resistance after curing.

It was surprisingly found out that the object can be achieved with the features of claim 1.

Especially, it was found out that a combination of a dispersion of a polyurethane polymer with isocyanate-reactive groups used in combination with one or more dispersions of other polymers obtained from polymerization of olefinically unsaturated monomers can be used for formulating a latent reactive dispersion adhesive having a low activation temperature and high final adhesive bond strength as well as good heat resistance after curing.

Specifically, according to the invention, a one-component dispersion adhesive is proposed, the adhesive comprising:
a) At least one polyurethane polymer **PU** having isocyanate-reactive groups,
b) At least one polymer **P** obtained from polymerization of one or more types of olefinically unsaturated monomers, and
c) At least one surface deactivated oligomeric polyisocyanate **PI.**

As it turned out, the proposed one-component dispersion adhesives have a low activation temperature and they are suitable for use in bonding processes, where substrates are pre-coated with the adhesive and activated with heat before being contacted with another substrate followed by chemical curing of the adhesive layer. The low activation temperature of the proposed adhesive enables considerable energy savings in such bonding processes.

On the other hand, the proposed dispersion adhesives exhibit high final adhesive bond strength and good heat resistance, which makes them especially suitable for use in bonding of automotive interior parts, such as in bonding of plastic parts to headliners.

Additional aspects of the present invention are defined in further independent claims. Particularly preferred embodiments are outlined throughout the description and the dependent claims.

### Detailed description of the invention

The subject of the present invention is a one-component dispersion adhesive comprising:
a) At least one polyurethane polymer **PU** having isocyanate-reactive groups,
b) At least one polymer **P** obtained from polymerization of one or more types of olefinically unsaturated monomers, and
c) At least one surface deactivated oligomeric polyisocyanate **PI.**

The prefix "poly" in substance designations such as "polyol" or "polyisocyanate" refers to substances which in formal terms contain two or more per molecule of the functional group that occurs in their designation. A polyol, for example, is a compound having two or more hydroxyl groups, and a polyisocyanate is a compound having two or more isocyanate groups.

The term "polymer" designates a collective of chemically uniform macromolecules produced by a polyreaction (polymerization, polyaddition, polycondensation) where the macromolecules differ with respect to their degree of polymerization, molecular weight, and chain length. The term also comprises derivatives of said collective of macromolecules resulting from polyreactions, that is, compounds which are obtained by reactions such as, for example, additions or substitutions, of functional groups in predetermined macromolecules and which may be chemically uniform or chemically nonuniform.

The term "molecular weight" refers to the molar mass (g/mol) of a molecule or a part of a molecule, also referred to as "moiety". The term "average molecular weight" refers to number average molecular weight (Mₙ) or to weight average molecular weight (M_{w}) of an oligomeric or polymeric mixture of molecules or moieties. The molecular weight may be determined by gel permeation chromatography (GPC) using polystyrene as standard, styrene-divinylbenzene gel with porosity of 100 Angstrom, 1000 Angstrom and 10000 Angstrom as the column and, depending on the molecule, tetrahydrofurane as a solvent, at 35°C, or 1 ,2,4-trichlorobenzene as a solvent, at 160 °C.

The term "average OH-functionality" designates the average number of hydroxyl (OH) groups per molecule. The average OH-functionality of a compound can be calculated based on the number average molecular weight (Mₙ) and the hydroxyl number of the compound.

The term "open time" designates the length of a time period during which an adhesive applied to a surface of a substrate is still able to form an adhesive bond after being contacted with another substrate.

The "amount of at least one component X" in a composition, for example "the amount of the at least one polymer P" refers in the present document to the sum of the individual amounts of all polymers P contained in the composition. For example, in case the at least one polymer P is a polyester polyurethane and the composition comprises 20 wt.-% of at least one polymer P, the sum of the amounts of all polyester polyurethanes contained in the composition equals 20 wt.-%.

The one-component dispersion adhesive of the present invention comprises at least one polyurethane polymer **PU** having isocyanate-reactive groups.

In this document, the term "polyurethane polymer" refers to polymers prepared by the so called diisocyanate polyaddition process. These also include those polymers which are virtually or entirely free from urethane groups. Examples of polyurethane polymers are polyether-polyurethanes, polyester-polyurethanes, polyether-polyureas, polyureas, polyester-polyureas, polyisocyanurates and polycarbodiimides.

The term "isocyanate-reactive group" refers here to functional groups which are capable of reacting with an isocyanate group in an addition reaction, thereby forming a chemical bond between carbon atom of the isocyanate group and one of the atoms of the functional group. These types of functional groups are also characterized as "active hydrogen groups". Examples of isocyanate-reactive groups include, for example, hydroxyl groups (OH), mercapto groups (SH), primary amino groups (NH₂), and secondary amino groups (NH).

In embodiments, the isocyanate-reactive groups of the at least one polyurethane polymer **PU** are selected from hydroxyl groups (OH), mercapto groups (SH), primary amino groups (NH₂), and secondary amino groups (NH), preferably from hydroxyl groups (OH), primary amino groups (NH₂), and secondary amino groups (NH).

The one-component dispersion adhesive further comprises at least one polymer **P** obtained from polymerization of one or more types of olefinically unsaturated monomers,
The term "olefinically unsaturated monomers" refers to monomers having at least one carbon-carbon double bond. Suitable polymers **P** include both homopolymers and copolymers of olefinically unsaturated monomers. The term "copolymer" refers in the present disclosure to a polymer derived from more than one species of monomer ("structural unit"). The polymerization of monomers into copolymers is called copolymerization. Copolymers obtained by copolymerization of two monomer species are known as bipolymers and those obtained from three and four monomers species are called terpolymers and quaterpolymers, respectively.

The one-component dispersion adhesive further comprises at least one surface deactivated oligomeric polyisocyanate **PI.**

The term "oligomer" designates a compound built up through the linkage of a few monomers, for example dimers, trimers, tetramers and other polymeric materials. Term "polyisocyanate oligomer" can designate an individual oligomer or a mixture of oligomers of diisocyanates, wherein these oligomers can be built up of like or different diisocyanates.

In embodiments, the one-component dispersion adhesive comprises:
a) 5 - 50 wt.-%, preferably 20 - 40 wt.-% of the at least one polyurethane polymer **PU** having isocyanate-reactive groups,
b) 5 - 35 wt.-%, preferably 10 - 25 wt.-% of the at least one polymer **P,** and
c) 0.5 - 10 wt.-%, preferably 1 - 5 wt.-% of the at least one surface deactivated oligomeric polyisocyanate **PI,** all proportions being based on the total weight of the one-component dispersion adhesive.

Especially suitable polyurethane polymers having isocyanate-reactive groups include polyester polyurethanes, polyether polyurethanes, polyether-polyureas, polyureas, and polyester-polyureas with isocyanate-reactive groups, particularly polyester polyurethanes having isocyanate-reactive groups, especially having a minimum film-forming temperature determined using the method defined in ISO 2115:1996 standard of at or below 25 °C, preferably at or below 15 °C.

The presence of such polyurethane polymers having isocyanate-reactive groups has been found out to enable providing the one-component dispersion adhesive with thermoplastic properties and to lower the activation temperature.

Suitable polyurethane polymers having isocyanate-reactive groups can be obtained from reactions of polyols, particularly diols, with polyisocyanates, especially diisocyanates, and optionally in combination with chain extenders, such as functional diamines.

The constituents a), b), and c) are preferable present in the one-component dispersion adhesive as solid particles that are dispersed in a liquid phase, particularly water. Furthermore, the one-component dispersion adhesive may be produced by mixing of dispersions, especially aqueous dispersions, of the at least one polyurethane polymer **PU** having isocyanate-reactive groups, the at least one polymer **P,** and the at least one surface deactivated oligomeric polyisocyanate **PI** with each other.

Suitable dispersions of polyurethane polymers having isocyanate-reactive groups for use in preparing the one-component dispersion adhesive of the present invention are commercially available, for example, under the trade name of Dispercoll^{®} U series, such as Dispercoll^{®} U 53, 54, and U 2682 (all from Covestro).

In embodiments, the at least one surface deactivated oligomeric polyisocyanate **PI** is selected from surface deactivated dimerization products of aromatic and aliphatic isocyanate monomers, particularly dimerization products of diisocyanate monomers including, for example 1,6-hexamethylene diisocyanate (HDI), 2-methylpentamethylene 1,5-diisocyanate, 2,2,4- and 2,4,4-trimethyl-1,6-hexamethylene diisocyanate (TMDI) and mixtures of these isomers, 1,10 decamethylene diisocyanate, 1,12-dodecamethylene diisocyanate, lysine diisocyanate, lysine ester diisocyanate, cyclohexane 1,3-diisocyanate and cyclohexane 1,4-diisocyanate and mixtures of these isomers, 1-methyl-2,4- and -2,6-diisocyanatocyclohexane and mixtures of these isomers (HTDI or H6TDI), 1-isocyanato-3,3,5-trimethyl-5-isocyanatomethylcyclohexane (= isophoronediisocyanate or IPDI), perhydro-2,4'- and -4,4'-diphenylmethane diisocyanate (HMDI or H12MDI) and mixtures of these isomers, 1,4- diisocyanato-2,2,6-trimethylcyclohexane (TMCDI), 1,3- and 1,4-bis(isocyanato-methyl)cyclohexane, m- and p-xylylene diisocyanate (m- and p-XDI) and mixtures of these isomers, m- and p-tetramethyl-1,3- and 1,4-xylylene diisocyanate (m- and p-TMXDI) and mixtures of these isomers, bis(1-isocyanato-1-methylethyl)naphthalene, 2,4- and 2,6-tolylene diisocyanate and mixtures of these isomers (TDI), 4,4'-diphenylmethane diisocyanate, optionally with proportions of 2,4'- and/or 2,2'-diphenylmethane diisocyanate (MDI), 1,3- and 1,4-phenylene diisocyanate (PDI) and mixtures of these isomers, naphthalene 1,5-diisocyanate (NDI), 3,3'-dimethyl-4,4'-diisocyanatobiphenyl (TODI), and dianisidine diisocyanate (DADI).

In embodiments, the at least one surface deactivated oligomeric polyisocyanate PI is selected from surface deactivated dimerization products of tolylene-2,4-diisocyanate (TDI) and isophorone diisocyanate (1-isocyanato-3,3,5-trimethyl-5-isocyanatomethylcyclohexane, IPDI), preferably surface deactivated dimerization products tolylene-2,4-diisocyanate (TDI).

As already discussed, the at least one surface deactivated oligomeric polyisocyanate **PI** is preferably present in the one-component dispersion adhesive as solid particles that are dispersed in a liquid phase, particularly water.

In embodiments, the surface deactivated oligomeric polyisocyanate **PI** has a mean particle diameter D₅₀ of below 120 µm, particularly 0.01 - 100 µm, preferably 0.1 - 50 µm, more preferably 0.3 - 30 µm. Furthermore, the surface deactivated oligomeric polyisocyanate **PI** is solid at a normal room temperature, particularly having a melting point of at least 35 °C, preferably at least 50 °C, more preferably at least 75 °C, even more preferably at least 100 °C.

Surface-deactivated oligomeric polyisocyanates that are solid at normal room temperature are known from the prior art, for example from EP 0 467168 A and DE 10 140 206 A.

In embodiments, the one-component dispersion adhesive comprises 1.5 - 5 wt.-%, preferably 2 - 5 wt.-%, more preferably 2.5 - 5 wt.-%, even more preferably 3-5 wt.-% of the at least one surface deactivated oligomeric polyisocyanate **PI,** based on the total weight of the one-component dispersion adhesive.

Particularly, the surface-deactivated oligomeric polyisocyanate **PI** may consist of particles of oligomeric polyisocyanate, wherein the surface of said particles is covered with a protective layer of a substance that is sufficiently impermeable and resistant at room temperature or at slightly elevated temperatures to enclose the isocyanate groups within the particle permanently such that they are rendered inaccessible to chemical reactants, particularly to compounds with active hydrogen atoms. When heating the surface-deactivated oligomeric polyisocyanate **PI** to a curing temperature, for example of at least 65 °C, particular at least 75 °C, the protective layer on the polyisocyanate particles is damaged such that the isocyanate groups within the particles are accessible for chemical reactants.

The surface-deactivated oligomeric polyisocyanate **PI** may be obtained from the reaction of an oligomeric polyisocyanate, on which the surface-deactivated oligomeric polyisocyanate **PI** is based, with a substance having at least one group reactive towards isocyanate groups. A chemical reaction on the surface of the oligomeric polyisocyanate particles results in the formation of a protective layer. Examples of substances that may be used for the surface deactivation of the polyisocyanate particles include primary and secondary aliphatic amines, amino amides, hydrazines, hydrazides, phenols, carboxylic acids, amindines and guanidines.

Especially suitable substances for the surface deactivation are primary and secondary amines, particularly primary polyamines as well as fatty amines, polyalkyleneamines, polyamidoamines and carboxylic acid salts of said amines. The protective layer formed from these substances contains urea groups.

In embodiments, the at least one surface deactivated oligomeric polyisocyanate **PI** has an isocyanate-content determined according to ISO 11909 standard of 2.5 - 25 %, preferably 5-20 %.

Suitable polymers **P** obtained from polymerization of one or more types of olefinically unsaturated monomers for use in the one-component dispersion adhesive include, for example, copolymers obtained from free radical polymerization of monomers selected from the group consisting of olefin monomers, such as ethylene, propylene butylene, isoprene, and butadiene, styrene, acrylonitrile, (meth)acrylic acid, (meth)acrylate, vinyl ester, and vinyl chloride.

In the present disclosure, the term "(meth)acrylate" designates methacrylate or acrylate. In analogy, "(meth)acrylic" designates methacrylic acid or acrylic acid.

Suitable (meth)acrylate monomers for use in the at least one polymer **P** include, for example, alkyl(meth)acrylates, such as methyl acrylate, methyl methacrylate, ethyl acrylate, n-butyl acrylate, n-butyl methacrylate, n-pentyl acrylate, n-hexyl acrylate, n-heptyl acrylate, n-octyl acrylate, n-octyl methacrylate, n-nonyl acrylate, lauryl acrylate, stearyl acrylate, behenyl acrylate, and their branched isomers, as for example isobutyl acrylate, 2-ethylhexyl acrylate, 2-ethylhexyl methacrylate, isooctyl acrylate, isooctyl methacrylate, and also cyclohexyl methacrylate, isobornyl acrylate, isobornyl methacrylate or 3,5-dimethyladamantyl acrylate.

In embodiments, the at least one polymer **P** is selected from copolymers of vinyl acetate and ethylene, copolymers of vinyl acetate, ethylene, and (meth)acrylate, copolymers of vinyl acetate, ethylene, and vinyl ester, copolymers of vinyl chloride, ethylene, and vinyl laureate, copolymers of vinyl acetate and vinyl versatate, copolymers of (meth)acrylate and styrene, copolymers of (meth)acrylate, styrene, and butadiene, copolymers of (meth)acrylate and acrylonitrile, copolymers of styrene and butadiene, and copolymers of (meth)acrylic acid and styrene.

In exemplary embodiments, the one-component dispersion adhesive comprises:
b1) At least one first polymer **P1** selected from copolymers of (meth)acrylate and styrene, copolymers of (meth)acrylate, styrene, and butadiene, copolymers of styrene and butadiene, and copolymers of (meth)acrylic acid and styrene and/or
b2) At least one second polymer **P2** selected from copolymers of ethylene and vinyl acetate, copolymers of vinyl acetate and vinyl versatate, copolymers of vinyl acetate, ethylene, and (meth)acrylate, copolymers of vinyl acetate, ethylene, and vinyl ester, copolymers of vinyl chloride, ethylene, and vinyl laureate, and copolymers of (meth)acrylate and acrylonitrile.

The use of the two different types of polymers **P1** and **P2** in the one-component dispersion adhesive has been found out to improve the bonding to different types of plastic substrates.

In embodiments, the at least one first polymer **P1** has a glass transition temperature (T_{g}) determined by dynamical mechanical analysis (DMA) as the peak of the measured loss modulus (G") curve using an applied frequency of 1 Hz and a strain level of 0.1% of 10 - 40 °C, preferably 15 - 35 °C and/or the at least one second polymer **P2** has a glass transition temperature (Tg) determined by dynamical mechanical analysis (DMA) as the peak of the measured loss modulus (G") curve using an applied frequency of 1 Hz and a strain level of 0.1% of -5 - 25 °C, preferably 0 - 20 °C .

As already discussed, the at least one polymer P is preferably present in the one-component dispersion adhesive as solid particles that are dispersed in a liquid phase, particularly water.

For the preparation of the one-component dispersion adhesive, the at least one polymer **P** may be provided as a dispersion, particularly an aqueous dispersion, which is mixed with the other constituents to provide the adhesive. In the present disclosure, the term "dispersion" is considered to encompass also dispersions of polymers having viscoelastic properties and which, therefore, could also be characterized as "emulsions".

Aqueous polymer dispersions of at least one polymer **P** can be provided by using commercially available aqueous polymer dispersions and/or re-dispersible polymer powders, which can be mixed with water and/or with aqueous polymer dispersion(s) to obtain the aqueous polymer dispersion of at least one polymer **P.** Furthermore, commercially available aqueous polymer dispersions can be diluted with addition water to adjust the solids content. The term "re-dispersible polymer powder" refers in the present disclosure to a dried residue of an aqueous polymer dispersion, said dispersion being a mixture of at least one water-insoluble polymer. Re-dispersible polymer powders are generally produced by spray-drying techniques of water-based dispersions containing. Re-dispersible polymer powders may further comprise one or more compounds selected from colloidal stabilizers and antiblocking agents.

Suitable aqueous polymer dispersions for use in the preparation of the one-component dispersion adhesive are commercially available, for example,
Suitable aqueous dispersions of the at least one polymer **P** for use in preparation of the one-component dispersion adhesive are commercially available, for example
from Synthomer (UK) under the trade name of Plextol^{®}, such as Plextol^{®} E 303 and Plextol^{®} X 4002 (pure acrylics) and Revacryl^{®}, such as Revacryl^{®} P 7966 and Revacryl^{®} R 245 (styrene acrylate)
from Celanese under the trade name of Mowilith^{®}, such as Mowilith^{®} LDM 7978 (acrylic), Mowilith^{®} LDM 7651 (styrene acrylate) and Mowilith^{®} LDM 1891 (ethylene-vinylacetate copolymer)
from BASF under the trade name of Acronal^{®}, such as Acronal^{®} 4410 (styrene acrylate), Acronal^{®} 296 D (styrene acrylate), Acronal^{®} DS 5017 (pure acrylate), and Acronal^{®} A 107 (pure acrylate);
from Arkema under the trade name of Encor^{®}, such as Encor^{®} 2100, Encor^{®} 2423 and Encor^{®} 2425 (styrene acrylates);
from Wacker Chemie under the trade name of Vinnapas^{®}, such as Vinnapas^{®} EAF 60 and Vinnapas^{®} EAF 67 (vinyl acetate/ethylene/acrylate polymer) and Vinnapas^{®} CA 55 (ethylene-vinylacetate copolymer); and
from Dow Chemicals under the trade name of Primal^{®}, such as Primal^{®} CA-162 and Primal^{®} CA-172 (acrylic);
from OrganikKimya under the trade name Orgal^{®} such as Orgal^{®} PST 50 A or Orgal^{®} K640N (styrene acrylates);
from IcapSira under the trade name Acrilem^{®} ST181 and Acrilem^{®} ST184 (styrene acrylates);
from Alberdingk Boley under the trade name Alberdingk^{®} such as Alberdingk^{®} SC 4450 and Alberdingk^{®} AS 6800 (styrene acrylates).

In embodiments, the one-component dispersion adhesive comprises:
a) 5 - 40 wt.-%, preferably 20 - 40 wt.-% of the at least one polyurethane polymer **PU** having isocyanate-reactive groups,
b1) 2.5 - 25 wt.-%, preferably 5-20 wt.-% of the at least one first polymer **P1** and/or
b2) 2.5 - 25 wt.-%, preferably 5-20 wt.-% of the at least one second polymer **P2,** and
c) 0.5 - 10 wt.-%, preferably 1 - 5 wt.-% of the at least one surface deactivated oligomeric polyisocyanate **PI.**

The one-component dispersion adhesive may have a water content of at least 15 wt.-%, particularly at least 25 wt.-%, especially not more than 85 wt.-%, particularly not more than 75 wt.-%.

In exemplary embodiments, the one-component dispersion adhesive has a water content of 30 - 70 wt.-%, preferably 40 - 60 wt.-%.

Generally, the one-component dispersion adhesive may further comprise auxiliary substances and additives, such as stabilizers, thickening agents, anti-aging agents, fungicides, pigments, colorants, wetting agents, antifoaming agents, matting agents, and fillers. The total amount of such auxiliary substances and additives is preferably not more than 10 wt.-%, particularly not more than 5 wt.-%, based on the total weight of the one-component dispersion adhesive.

In embodiments, the one-component dispersion adhesive is substantially free of organic solvents, especially substantially free of so-called VOCs (volatile organic compounds) and/or plasticizers. The expression "substantially free of" is understood to mean that the proportion of the respective substance is not more than 0.1 wt.-%, preferably not more than 0.05 wt.-% of the total weight of the one-component dispersion adhesive.

Generally, plasticizers and organic solvents are disadvantageous from the standpoint of both ecotoxicology and work hygiene. Moreover, plasticizers can migrate to the surface of an adhesive layer and cause failure of a bond or can cause the surface to become tacky, which leads to soiling of the adhesive seams. Organic solvents are also unwanted, since on the one hand they can have an additional risk potential during heating and application of the adhesive, and on the other because they too can migrate and over the long term be released to the environment and given off to materials which are in contact with the adhesive and can adversely affect them or lead to failure of the adhesive bond.

The one-component dispersion adhesive may be produced by mixing of dispersions, especially aqueous dispersions, of the at least one polyurethane polymer **PU** having isocyanate-reactive groups, the at least one polymer **P,** and the at least one surface deactivated oligomeric polyisocyanate **PI** with each other and optionally with other constituents, such as the auxiliary substances and additives, if applicable, until a homogeneously mixed mixture is obtained.

Mixing of the constituents can be conducted using any conventional mixing apparatus that is able to provide sufficient mixing at low to medium shear rates, for example, by using open or closed dispersers, propeller stirrers, or ViscoJet stirrers, particularly at a temperature of 10 - 30 °C, especially 15 - 25 °C.

Another aspect of the present invention is a pre-coated part comprising a latent reactive adhesive layer obtained by a process comprising steps of:
- Applying a one-component dispersion adhesive of the present invention to a surface of a substrate to form a wet adhesive layer and
- Drying the wet adhesive layer, preferably by exposing it to air.

Drying of the wet adhesive layer can be conducted passively at normal room temperature, particularly at a temperature of at or below 60 °C, preferably at or below 50 °C, or actively, for example using a non-heated or heated air flow.

In embodiments, at least 50 wt.-%, particularly at least 75 wt.-%, especially at least 95 wt.- % of the volatile constituents, particularly water, is removed from the wet adhesive layer, during the drying step.

The substrate of the pre-coated part may be a plastic substrate, particularly comprising at least one polymer selected from the substrate comprises at least one polymer, preferably selected from acrylonitrile butadiene styrene (ABS), polycarbonate, and polyolefins, for example polypropylene, preferably ABS and polyolefins, particularly ABS and polypropylene.

The dried adhesive layer of the pre-coated part is particularly not tacky to touch, which enables easy storing of the pre-coated parts in form of stacks without using release liners or other types of films between the consecutive parts.

Once used for in a bonding application, the adhesive layer can be first activated by heating, contacted with a surface of another substrate, and chemically cured. Alternatively, the adhesive layer can be first contacted with a surface of another substrate and then activated by heating followed by the chemical curing of the adhesive.

Another aspect of the present invention is use of the one-component dispersion adhesive of the present invention as an assembly adhesive, laminating adhesive or as an adhesive for the building of sandwich elements, particularly for bonding of plastic parts to automotive headliners.

Still another aspect of the present invention is a method for adhesively bonding a first substrate to a second substrate, the method comprising steps of:
I) Applying a one-component dispersion adhesive of the present invention to a surface of the first substrate to form a wet adhesive layer,
II) Drying the wet adhesive layer, preferably by exposing it to air, to form an at least partially dried adhesive layer, preferably by exposing the wet adhesive layer to air, to form a at least partially dried adhesive layer,
IIIa) Heating the at least partially dried adhesive layer to an activation temperature Tₐ and IVa) Contacting the activated adhesive layer with a surface of the second substrate or
IIIb) Contacting the at least partially dried adhesive layer with a surface of the second substrate and
IVb) Heating the at least partially dried adhesive layer to an activation temperature Tₐ.

In step I) of the method for adhesively bonding a first substrate to a second substrate, the one-component dispersion adhesive composition is applied to the surface of the first substrate using any conventional technique, for example, by means of a spray-gun, roller or a brush.

The wet adhesive layer may, for example, have a thickness of at least 50 µm, particularly at least 100 µm, especially not more than 1000 µm, such as not more than 750 µm, particularly 75 - 750 µm, especially 100 - 500 µm.

Drying of the wet adhesive layer in step II) of the method can be conducted passively or actively, for example using a non-heated or heated air flow. In exemplary embodiments, step II) is conducted at a temperature of at or below 60 °C, preferably at or below 50 °C, particularly at or below 45 °C.

In embodiments, at least 50 wt.-%, particularly at least 75 wt.-%, especially at least 90 wt.- % of the volatile constituents, particularly water, is removed from the wet adhesive film in step II), preferably by exposing the wet adhesive layer to air.

In step IIIa) and IVb) of the method, the at least partially dried adhesive layer is heated to an activation temperature Tₐ.

Heating of the at least partially dried adhesive layer to the activation temperature results in at least partial melting of the adhesive layer, which increases the tackiness of the adhesive layer and enables its use for bonding of the first substrate to the second substrate. On the other hand, the heating to the activation temperature also results in activation of the surface deactivated oligomeric polyisocyanate **PI** enabling the chemical curing of the adhesive layer. Typically, the melting of the adhesive layer and the activation of the surface deactivated oligomeric polyisocyanate **PI** are simultaneous processes. However, it is also possible that the adhesive layer starts to soften and/or melt at a slightly lower temperature before the activation temperature Tₐ has been reached.

The heating of the at least partially dried adhesive layer can be conducted using any conventional means, such as heating in an oven, heating with air stream, heating with infrared (IR)-radiation, or by heating in a heat press. The activated adhesive layer obtained from step IIIa) is preferably contacted with the second substrate within short time after the activation temperature is reached.

In embodiments, step IVb) is conducted using a heat press. In these embodiments, the at least partially dried adhesive layer obtained from step II) is activated by heating while being in contact with a surface of the second substrate.

In embodiments, the activation temperature Tₐ is at or above 65 °C, particularly at or above 75 °C. In exemplary embodiments, the activation temperature Tₐ is in the range of 65 - 120 °C, preferably, 70 - 105 °C, particularly 75 - 100 °C
The first and second substrate can be composed of any conventional material including polymeric material, metal, painted metal, glass, wood, wood derived materials such as natural fiber polypropylene (NFPP), and fiber materials.

Suitable polymeric materials include, for example, polyethylene (PE), particularly high density polyethylene (HDPE), polypropylene (PP), glass-fiber reinforced polypropylene (GFPP), polyvinyl chloride (PVC), polyethylene terephthalate (PET), polystyrene (PS), polycarbonate (PC), polymethylmethacrylate (PMMA), acrylonitrile butadiene styrene (ABS), polyamide (PA), and combinations thereof.

Furthermore, the first and second substrate can be composed of a single layer or of multiple layers of different types of materials. The layer(s) composed of polymeric materials can further contain additives such as fillers, plasticizers, flame retardants, thermal stabilizers, antioxidants, pigments, dyes, and biocides.

In embodiments, the first substrate is a plastic substrate, preferably comprising at least one polymer selected from acrylonitrile butadiene styrene (ABS), polycarbonate, and polyolefins, for example polypropylene, preferably ABS and polyolefins, particularly ABS and polypropylene and/or the second substrate comprises a fiber material, preferably a non-woven fabric.

The term "non-woven fabric" designates in the present disclosure materials composed of fibers, which are bonded together by using chemical, mechanical, or thermal bonding means, and which are neither woven nor knitted. Non-woven fabrics can be produced, for example, by using a carding or needle punching process, in which the fibers are mechanically entangled to obtain the nonwoven fabric. In chemical bonding, chemical binders such as adhesive materials are used to hold the fibers together in a non-woven fabric.

Suitable fibers for use in the non-woven fabric of the second substrate include, for example, synthetic organic, organic, an inorganic fibers.

Suitable synthetic organic fibers for the non-woven fabric include, for example, polyester fibers, polypropylene fibers, polyethylene fibers, nylon fibers, and polyamide fibers. Suitable inorganic fibers for the non-woven fabric include, for example, glass fibers, aramid fibers, wollastonite fibers, and carbon fibers.

In embodiments, the non-woven fabric of the second substrate has as the main fiber component synthetic organic fibers, preferably selected from the group consisting of polyester fibers, polypropylene fibers, polyethylene fibers, nylon fibers, and polyamide fibers.

In exemplary embodiments, the first substrate comprises at least 50 wt.-%, particularly at least 75 wt.-% of ABS or polyolefin, particularly ABS or polypropylene and/or the second substrate is an automotive headliner.

### Examples

The followings compounds and products shown in Table 1 were used in the examples.

**Table 1**

| | | |
|---|---|---|
| Dispersion of polyurethane polymer **PU** | Aqueous polyurethane dispersion, solids content 49-51 % (ISO 3251), minimum film forming temperature ca. 5 °C (ISO 976) | Covestro |
| Dispersion of Polymer **P1** | Styrene-acrylic copolymer dispersion, solids content 50 %, glass transition temperature 20 °C | Organikkimya |
| Dispersion of Polymer **P2** | Aqueous dispersion of vinyl acetate-ethylene copolymer, solids content 61-63 % (ISO 3251), minimum film forming temperature ca. 0 °C (ISO 2115), glass transition temperature ca. 5 °C | Wacker |
| Dispersion of Polyisocyanate **PI** | Aqueous dispersion of surface deactivated solid polyisocyanate (TDI dimer), NCO content 7.5 - 11 % (ISO 11909), d₉₀ particle size 10-25 µm, solids content ca. 60 % | Covestro |

### Preparation of adhesive compositions

The reference and inventive adhesive compositions were prepared by mixing of the constituents with each other using an overhead stirrer with a pitched-blade propeller or a ViscoJet blade in proportions as shown in Table 2.

### Measurement methods

The adhesive compositions were characterized using the following measurement methods.

### Preparation of test specimens

The tested dispersion adhesives were applied with a spray gun (type Walther Pilot, nozzle opening 1.5mm) to a surface of an ABS substrate having dimensions of 150 mm x 50 mm.

The adhesive was applied to cover ca. 5 cm of the whole length of the surface leaving ca. 2/3 of the total length uncoated to enable fastening of the test specimen to a tensile test apparatus. The adhesive was applied in a discontinuous teardrop-shaped pattern using a wet adhesive coating weight of 80-100 g/m².

The wet adhesive film was dried for 7 days at room temperature after which a second substrate composed of a now-woven fabric sheet having a thickness of 6 mm was contacted with the adhesive and pressed in a plate press using a pressure of 0.6 bar for 60 seconds.

In order to monitor and adjust the temperature of the adhesive film during the pressing and curing steps, a temperature sensor was installed in the joint region between the ABS substrate and the non-woven fabric sheet.

In the pressing step, the plate of the press facing toward the non-woven fabric sheet was heated to 120 °C and the plate facing towards the ABS-specimen was heated to 80 °C. In this manner the dried adhesive was heated to an activation temperature (Tₐ) of approx. 80 °C.

The prepared test specimens were stored for 3 days at room temperature before being tested for their adhesive bond properties.

### Tensile lap-shear strength

Lap shear strength (LSS) measurements were conducted according the EN 1465 standard using a material testing apparatus (Zwick Z 020) and a test speed 100 mm/min.

The lap shear strength values for each tested adhesive presented in Table 2 have been obtained as an average of three measurements conducted with identical test specimens prepared by using the same adhesive.

### Heat shear resistance

Shear Adhesion Failure Temperatures (SAFT) were measured using the test specimens prepared as described above and cut down to a bonded width of 25 mm while maintaining a bonded length of 5 cm. In the first set of measurements, the test specimens were used without any pre-treatment whereas in the second measurements, the test specimens had been subjected to a climate changing test with alternating cycles of cold, heat and humidity (for example according to BMW 308.2) before measuring of the heat shear resistances.

At the beginning of the SAFT measurement, a test specimen was suspended vertically from the free end of the ABS substrate on a metal hook and placed in an oven, which had been preheated to a temperature of 110 °C. A metal weight corresponding to a static load of 1 kg was attached to another metal hook fixed on a clamp attached to the free end of the non-woven sheet.

The test specimens were kept in the oven until the adhesive bonds of all test specimens had failed or until it was clear that no bond failure will occur at the chose temperature for a reasonable period of time. The length of time period from start of the measurement to the bond failure was recorded as the heat resistance value. For each tested adhesive, two measurements were conducted. In case the difference between two values obtained with the same adhesive was more than 90 seconds, a third measurement was also conducted.

The heat resistance values of the tested adhesive compositions presented in Table 2 have been obtained as an average of two (or three) measurements conducted with the same adhesive composition.

**Table 4**

| **Composition [wt.-%]** | **Ex-1** | **Ex-2** | **Ex-3** | **Ex-4** | **Ex-5** | **Ex-6** |
|---|---|---|---|---|---|---|
| Dispersion of polyurethane polymer **PU** | 40 | 40 | 40 | 40 | 40 | 55 |
| Emulsion of Polymer **P1** | 25 | 26 | 27 | 28 | 29 | 0 |
| Dispersion of Polymer **P2** | 30 | 30 | 30 | 30 | 30 | 40 |
| Dispersion of surface deactivated Polyisocyanate **PI** | 5 | 4 | 3 | 2 | 1 | 5 |
| **Total** | 100 | 100 | 100 | 100 | 100 | 100 |

| **Measured properties** | | | | | | |
|---|---|---|---|---|---|---|
| Lap Shear Strength [N/mm²] | 0.6 | 0.5 | 0.6 | 0.4 | 0.4 | 0.5 |
| Heat Shear Resistance (110 °C; 25x50mm) until failure [min] | no failure | no failure | no failure | 61 | 19 | no failure |
| Heat Shear Resistance (110 °C; 25x50mm) after climatic changing test until failure [min] | no failure | no failure | no failure | 130 | 166 | no failure |

## Claims

1. A one-component dispersion adhesive comprising:
a) At least one polyurethane polymer **PU** having isocyanate-reactive groups,
b) At least one polymer **P** obtained from polymerization of one or more types of olefinically unsaturated monomers, and
c) At least one surface deactivated oligomeric polyisocyanate **PI.**

2. The one-component dispersion adhesive according to claim 1 comprising:
a) 5 - 50 wt.-%, preferably 20 - 40 wt.-% of the at least one polyurethane polymer **PU** having isocyanate-reactive groups,
b) 5 - 35 wt.-%, preferably 10 - 25 wt.-% of the at least one polymer **P,** and
c) 0.5 - 10 wt.-%, preferably 1 - 5 wt.-% of the at least one surface deactivated oligomeric polyisocyanate **PI.**

3. The one-component dispersion adhesive according to claim 1 or 2, wherein the at least one polyurethane polymer **PU** having isocyanate-reactive groups is a polyester polyurethane or a polyether polyurethane, preferably having a minimum film-forming temperature determined using the method defined in ISO 2115:1996 standard of at or below 25 °C, preferably at or below 15 °C.

4. The one-component dispersion adhesive according to any one of previous claims, wherein the at least one surface deactivated oligomeric polyisocyanate **PI** is selected from surface deactivated dimerization products of aromatic and aliphatic isocyanate monomers, preferably of tolylene-2,4-diisocyanate (TDI) and isophorone diisocyanate (IPDI).

5. The one-component dispersion adhesive according to any one of previous claims, wherein the at least one surface deactivated oligomeric polyisocyanate **PI** has an isocyanate-content determined according to ISO 11909:2007 standard of 2.5 - 25 %, preferably 5 - 20 %.

6. The one component dispersion adhesive according to any one of previous claims comprising 1.5 - 5 wt.-%, preferably 2 - 5 wt.-% of the at least one surface deactivated oligomeric polyisocyanate **PI.**

7. The one-component dispersion adhesive according to any one of previous claims comprising:
b1) At least one first polymer **P1** selected from copolymers of (meth)acrylate and styrene, copolymers of (meth)acrylate, styrene, and butadiene, copolymers of styrene and butadiene, and copolymers of (meth)acrylic acid and styrene and/or b2) At least one second polymer **P2** selected from copolymers of ethylene and vinyl acetate, copolymers of vinyl acetate and vinyl versatate, copolymers of vinyl acetate, ethylene, and (meth)acrylate, copolymers of vinyl acetate, ethylene, and vinyl ester, copolymers of vinyl chloride, ethylene, and vinyl laureate, and copolymers of (meth)acrylate and acrylonitrile.

8. The one-component dispersion adhesive according to claim 7 comprising:
a) 5 - 40 wt.-%, preferably 20 - 40 wt.-% of the at least one polyurethane polymer **PU** having isocyanate-reactive groups,
b1) 2.5 - 25 wt.-%, preferably 5-20 wt.-% of the at least one first polymer **P1** and/or
b2) 2.5 - 25 wt.-%, preferably 5-20 wt.-% of the at least one second polymer **P2,** and
c) 0.5 - 10 wt.-%, preferably 1 - 5 wt.-% of the at least one surface deactivated oligomeric polyisocyanate **PI.**

9. The one-component dispersion adhesive according to any one of previous claims having a content of water of 30 - 70 wt.-%, preferably 40 - 60 wt.-%.

10. A pre-coated part comprising a latent reactive adhesive layer obtained by a process comprising steps of:
- Applying a one-component dispersion adhesive according to any one of previous claims to a surface of a substrate to form a wet adhesive layer and
- Drying the wet adhesive layer, preferably by exposing it to air.

11. Use of the one-component dispersion adhesive according to any one of claims 1-9 as an assembly adhesive, laminating adhesive or as an adhesive for the building of sandwich elements, preferably for bonding of plastic parts to automotive headliners.

12. A method for adhesively bonding a first substrate to a second substrate, the method comprising steps of:
I) Applying a one-component dispersion adhesive according to any one of claims 1-9 to a surface of the first substrate to form a wet adhesive layer,
II) Drying the wet adhesive layer, preferably by exposing it to air, to form an at least partially dried adhesive layer,
IIIa) Heating the at least partially dried adhesive layer to an activation temperature Tₐ and
IVa) Contacting the activated adhesive layer with a surface of the second substrate
or
IIIb) Contacting the at least partially dried adhesive layer with a surface of the second substrate and
IVb) Heating the at least partially dried adhesive layer to an activation temperature Tₐ.

13. The method according to claim 12, wherein step II) is conducted at a temperature of at or below 60 °C, preferably at or below 50 °C and/or wherein the activation temperature Tₐ is in the range of 65 - 120 °C, preferably, 70 - 105 °C.

14. The method according to any one of claims 12-13, wherein the first substrate is a plastic substrate, preferably comprising at least one polymer selected from ABS, polycarbonate, and polyolefins, preferably ABS and polyolefins and/or wherein the second substrate comprises a fiber material, preferably a non-woven fabric.

15. The method according to any one of claims 12-14, wherein the second substrate is an automotive headliner.
